# EUROPÄISCHE PATENTANMELDUNG

(11) **EP 1 265 208 A1**
(43) Veröffentlichungstag der Anmeldung: **11.12.2002**
(21) Anmeldenummer: 01810552.8
(22) Anmeldetag: 08.06.2001
(51) Int. Cl.: G09B 23/28, G09B 19/00

(54) **Instruktionsgerät für die Dentalhygiene**

(71) Anmelder: Ilg, Markus, 3604 Thun (CH)
(72) Erfinder: Ilg, Markus, 3604 Thun (CH); Liechti, Christoph, 3425 Koppigen (CH); Läderach, Hansueli, 3414 Oberburg (CH); Burkhalter, Urs, 3075 Rüfenacht BE (CH)
(74) Vertreter: BOVARD AG - Patentanwälte

(57) **Zusammenfassung**

Das Gerät hat die Form einer Puppe (1) mit einem Kopf (2)und einem Gesicht, in dem ein Modell eines Gebisses (8) angeordnet ist. Mindestens ein Teil der Zähne dieses Gebisses sind tansparent und weisen in ihrem Inneren Lichtquellen auf. Mit einer Steuerung sind die Lichtquellen derart ansteuerbar, dass durch Aufblinken entsprechender Lichtquellen die zu reinigende Stelle, die Richtung, die Kadenz und die Dauer der Bewegung demonstriert wird, mit der eine zu instruierende Person eine Zahnbürste führen soll. Das Gebiss (8) weist eine obere Zahnreihe und eine untere Zahnreihe auf, welche relativ zueinander bewegbar sind. Dadurch können insbesondere Kinder der Demonstration des Geräts leichter folgen, als dies bei den aus dem Stand der Technik bekannten Geräten der Fall ist.

## Beschreibung

Die Erfindung betrifft ein Instruktionsgerät für die Dentalhygiene, bestehend aus einer Figur mit einem Gesicht, in dem ein Modell eines Gebisses angeordnet ist, wobei mindestens ein Teil der Zähne dieses Gebisses tansparent sind und in ihrem Inneren Lichtquellen aufweisen, wobei eine Steuerung vorhanden ist, durch welche die Lichtquellen ansteuerbar sind, derart, dass durch Aufblinken entsprechender Lichtquellen die zu reinigende Stelle, die Richtung, die Kadenz und die Dauer der Bewegung demonstriert wird, mit der eine zu instruierende Person eine Zahnbürste führen soll.

Die internationale Patentanmeldung WO 90/14651 zeigt eine Figur mit einem Gesicht mit einer Darstellung eines menschlichen Gebisses. Die Zähne dieses Gebisses sind transparent und in sechs verschiedene Sektoren aufgeteilt. In jedem Sektor befinden sich zwei verschieden farbige Leuchtdioden, mit denen dem Benutzer angezeigt wird, dass die betreffenden Zähne aussen beziehungsweise innen gebürstet werden sollen.

Das amerikanische Patent US 5 810 601 zeigt eine ähnliche Vorrichtung, bei der die zu reinigenden Stellen mittels einer Flüssigkristallanzeige angedeutet werden. Diese Vorrichtung erlaubt auch das Anzeigen der Richtung, in der die Zahnbürste geführt werden soll. Zusätzlich sind Mittel zum Erzeugen von Geräuschen oder Sprache vorgesehen.

Bei der Vorrichtung nach dem amerikanischen Patent US 5 944 531 sind transparente Nachbildungen von Zahnreihen auf einer Tafel angeordnet, wobei die verschiedenen Flächen jedes Zahnes individuell beleuchtbar sind. Die Demonstration kann mit Ton unterstützt werden.

Bei allen diesen Vorrichtungen ist es nicht möglich, während der Demonstration die Stellung der Kiefer direkt anzuzeigen und zu verändern. Bei der dritten der beschriebenen Vorrichtungen können zwar einzelne Flächen jedes Zahnes individuell beleuchtet werden, jedoch ist es bei der Anordnung der Zähne auf einer Tafel insbesondere für Kinder schwierig, die angezeigten Bereiche auf die eigenen Zähne zu übertragen.

Ausgehend von diesem Stand der Technik liegt der Erfindung die Aufgabe zugrunde, ein Instruktionsgerät für die Dentalhygiene vorzuschlagen, das insbesondere Kindern auf einfache verständliche Art demonstriert, wie die Zähne gereinigt werden sollen. Dabei solle das Gerät insbesondere auch die jeweils vorteilhaft einzunehmenden Stellungen der Kiefer vorzeigen können.

Diese Aufgabe wird erfindungsgemäss dadurch gelöst, dass das Gebiss eine obere Zahnreihe und eine untere Zahnreihe aufweist, welche relativ zueinander bewegbar sind. Durch diese Merkmale können insbesondere Kinder der Demonstration des Geräts leichter folgen, als dies bei den aus dem Stand der Technik bekannten Geräten der Fall ist.

Nach einer besonderen Ausführungsart der Erfindung ist die untere Zahnreihe in einem relativ zur Figur beweglichen Unterkiefer angeordnet und der Unterkiefer ist um eine Achse schwenkbar. Dies erlaubt auf konstruktiv einfache Weise das Ausführen von Bewegungen des Unterkiefers in einer der menschlichen oder tierischen Kieferbewegung ähnlichen Art.

Nach einer weiteren Ausführungsart der Erfindung sind im Gesicht eine Oberlippe und im Unterkiefer eine Unterlippe gebildet, die in Bezug aufeinander so bewegbar sind, dass sie sich in einer geschlossenen Stellung mindestens annähernd berühren und dabei die Zahnreihen verdecken. Dadurch ist es möglich, bei Nichtgebrauch des Geräts dessen Zähne zu verbergen.

Nach einer besonders bevorzugten Ausführungsart der Erfindung sind die Oberlippe und die obere Zahnreihe relativ zueinander beweglich und die Unterlippe und die untere Zahnreihe sind relativ zueinander beweglich. Durch diese Massnahmen ist das Gerät in der Lage, zusätzlich zu den bei der Zahnreinigung vorteilhaft einzunehmenden Stellungen der Kiefer auch verschiedene vorteilhaft einzunehmende Lippenstellungen zu demonstrieren.

Nach einer Weiterbildung der Erfindung ist die obere Zahnreihe in der Figur in einer Richtung mindestens annähernd senkrecht zur Berührungsebene der Zahnreihen beweglich gelagert und wird durch die Kraft mindestens einer Feder nach unten gedrängt und die untere Zahnreihe ist im Unterkiefer in der genannten Richtung beweglich gelagert und wird durch die Kraft mindestens einer Feder nach oben gedrängt, wobei der Unterkiefer ausgehend von der geschlossenen Stellung der Lippen in der genannten Richtung parallel nach unten verschiebbar ist. Durch die durch diese konstruktiv relativ einfachen Massnahmen ermöglichten Relativbewegungen zwischen den Lippen und den Zahnreihen erhält die zu instruierende Person den Eindruck, die Figur würde die Oberlippe nach oben und die Unterlippe nach unten bewegen, wie dies bei einem Gesicht der Fall ist.

Eine andere Ausführungsart der Erfindung sieht vor, dass weitere Lichtquellen ausserhalb der Zähne angeordnet sind. Damit können der zu instruierenden Person in einfacher Weise weitere Informationen übermittelt werden.

Nach einer anderen Ausführungsart der Erfindung kann das gerät mit einer Wiedergabevorrichtung für Ton ausgestattet sein. Damit kann beispielsweise die Demonstration mit Geräuschen oder Musik untermalt werden oder es können zusätzliche, gesprochene Informationen und Anleitungen übermittelt werden.

Eine weitere Ausführungsart der Erfindung sieht vor, dass das gerät gleichzeitig es als Halter für eine Zahnbürste ausgebildet ist. Nach einer Variante kann im gerät ein Ladegerät für eine elektrische Zahnbürste vorgesehen sein.

Nachfolgend wird eine Ausführungsbeispiel der Erfindung unter Bezugnahme auf die beiliegenden Zeichnungen beispielhaft beschrieben. Es zeigt
- Figur 1: eine Frontansicht der Vorrichtung,
- Figur 2: eine Seitenansicht des Kopfes mit geschlossenem Mund,
- Figur 3: eine Seitenansicht des Kopfes mit geöffneten Lippen,
- Figur 4: eine Seitenansicht des Kopfes mit geöffnetem Kiefer und
- Figur 5: eine im Kopf der Puppe eingebaute Leiterplatte mit darauf angeordneten Komponenten.

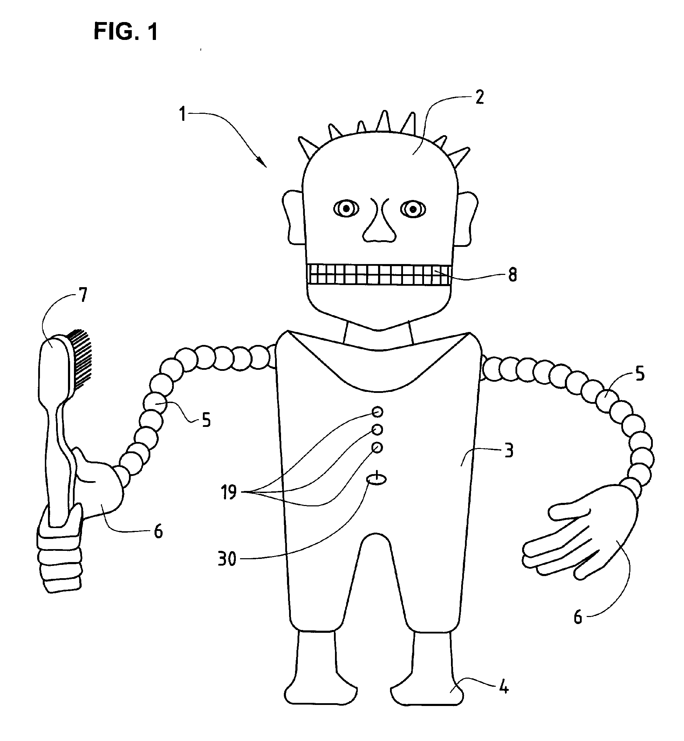

Die in Figur 1 dargestellte, als Ganzes mit 1 bezeichnete Vorrichtung hat die Gestalt einer Puppe mit einem Kopf 2, einem Rumpf 3, Armen 5 mit Händen 6 und Beinen mit Füssen 4, die es der Puppe ermöglichen, frei zu stehen. Die Arme 5 können flexibel sein und die Hände 6 können derart gestaltet sein, dass sie als Halter dienen, um eine Zahnbürste 7 bei Nichtgebrauch aufzunehmen. Ein etwa massstäbliches Modell eines menschlichen Gebisses ist mit 8 bezeichnet. Mindestens einzelne, vorzugsweise aber alle Zähne dieses Gebisses 8 bestehen mindestens teilweise aus einem transparenten Material, so dass das Leuchten von Lichtquellen, die im Inneren dieser Zähne angeordnet sind, von aussen sichtbar ist. Die Lichtquellen sind vorzugsweise Leuchtdioden. Im Rumpf 3 sind weitere Leuchtdioden 19 angeordnet, deren Zweck weiter unten beschrieben wird. Schliesslich ist mit 30 ein Knopf für das Starten des Instruktionsprogramms bezeichnet.

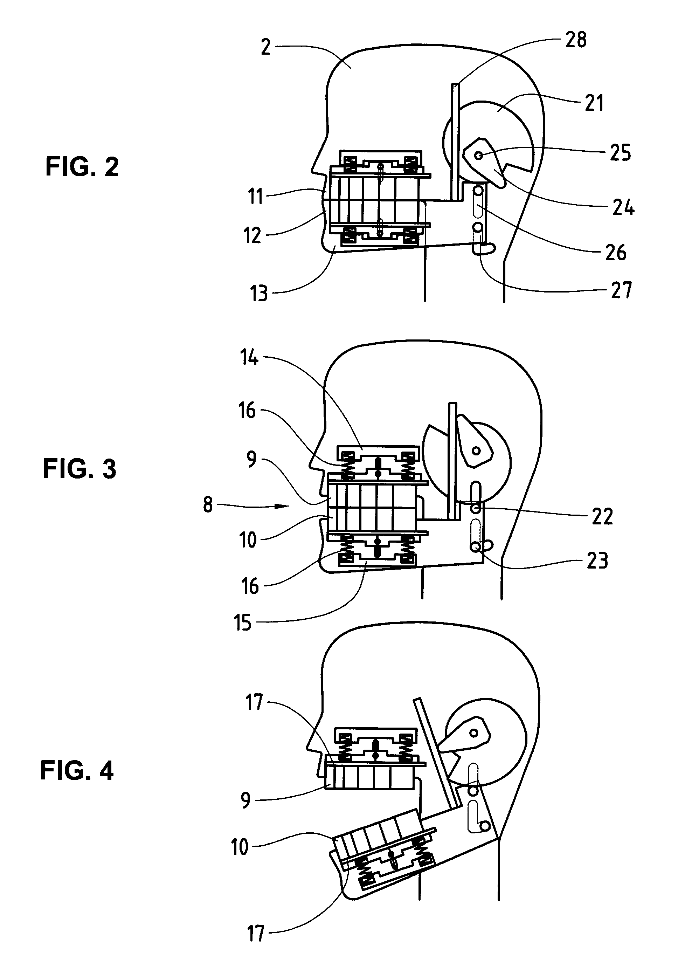

Die Figuren 2 bis 4 zeigen eine schematische seitliche Ansicht des Kopfes 2 der Puppe 1, wobei die wesentlichsten der darin angeordneten Elemente ebenfalls schematisch dargestellt sind. Das Gebiss 8 weist im wesentlichen die Merkmale eines menschlichen Gebisses auf, nämlich eine obere Zahnreihe 9 und eine untere Zahnreihe 10. Dank den im folgenden anhand eines Programmablaufs beschriebenen Elementen ist das Gerät 1 in der Lage, die wesentlichsten der während des Putzens der Zähne auszuführenden Gesichtsbewegungen zu demonstrieren. Beim Start des Programms ist der Mund der Puppe 1 geschlossen, wie in Figur 2 dargestellt. Das heisst, dass der bewegliche Unterkiefer 13 sich in seiner oberen Endlage befindet, in der sich die Oberlippe 11 und die Unterlippe 12 mindestens annähernd berühren, so dass die Zahnreihen 9 und 10 von aussen nicht sichtbar sind.

In einer ersten Phase der Zahnreinigung werden üblicherweise die Kiefer geschlossen gehalten und die Lippen geöffnet, um dann mit der Zahnbürste mit vertikalen Bewegungen über die Aussenflächen der sich berührenden oberen und unteren Zähne zu fahren. Damit die Puppe für die Demonstration dieser Reinigungsphase nicht mit beweglichen Lippen ausgestattet werden muss, was sehr aufwendig wäre, funktioniert sie wie folgt. In einer ersten Phase des Programmablaufs, deren Endlage in Figur 3 dargestellt ist, bewegt sich der Unterkiefer 13 entgegen der Kraft einer nicht dargestellten Feder linear nach unten. Diese Bewegung wird durch einen nicht dargestellten Antrieb, beispielsweise einen Elektromotor ausgelöst, der eine Welle 25 ausgehend von der in Figur 2 dargestellten Lage im Gegenuhrzeigersinn dreht. Auf der Welle 25 ist eine Kurvenscheibe 21 drehfest angeordnet, die bei der genannten Drehung einen am Unterkiefer 13 angeordneten Stift 22 nach unten drückt. Der Stift 22 bildet zusammen mit einem weiteren Stift 23 eine Parallelführung, indem die beiden Stifte in Führungsschlitzen 26 und 27 gleiten, die im Kopf 2 ortsfest angeordnet sind. Die Zahnreihen 9 und 10 sind jeweils auf einer Tragplatte 17 angeordnet, welche ihrerseits über Federn 16 an jeweils einer Lagerplatte abgestützt sind. Die obere Lagerplatte 14 ist ortsfest im Kopf angeordnet und die untere Lagerplatte 15 ist ortsfest im Unterkiefer 13 angebracht. Die Federn 16 drücken die obere 9 und untere Zahnreihe 10 gegeneinander, so dass bei der Vertikalbewegung des Unterkiefers 13 die Zähne geschlossen bleiben. Folglich verschiebt sich die obere Zahnreihe 9 gegenüber der Oberlippe 11 nach unten und gleichzeitig verschiebt sich die Unterlippe 12 gegenüber den Zähnen nach unten. Der Betrachter erhält dabei den Eindruck, die Puppe würde die Oberlippe nach oben und die Unterlippe nach unten bewegen, wie dies bei einem menschlichen Gesicht der Fall ist.

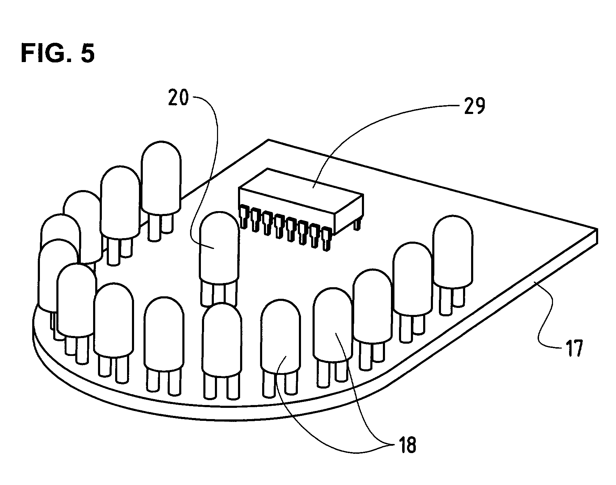

In dieser in Figur 3 dargestellten Stellung des Unterkiefers 13 und der Zahnreihen 9, 10 beginnt die Demonstration der ersten Reinigungsphase. Die in den Zähnen angeordneten Leuchtdioden 18 (siehe Figur 5) blinken abwechslungsweise, gegebenenfalls in Gruppen, und zeigen dadurch die zu bürstende Stelle, die Richtung und Kadenz, in der die Zahnbürste zu bewegen ist und die Dauer des Vorganges für jeweils eine Gruppe von Zähnen. Figur 5 zeigt, wie die Leuchtdioden auf einer Leiterplatte, die zugleich die oben erwähnte Tragplatte 17 ist, angeordnet sein können. Auf der Tragplatte 17 können gegebenenfalls weitere Bauelemente angeordnet sein, wie dies durch den IC 29 beispielsweise angedeutet ist. Nach Beendigung dieser Phase bewegt sich der Unterkiefer 13 weiter in die in Figur 4 dargestellte Stellung.

Diese Weitere Bewegung ist eine Drehbewegung um den Stift 22, der dabei am unteren Ende des Führungsschlitzes 26 ruht. Der untere Führungsschlitz 27 ist abgewinkelt, so dass der untere Stift 23 nach hinten ausweichen kann. Die Drehbewegung des Unterkiefers 13 wird durch einen Nocken 24 verursacht, der ebenfalls auf der Welle 25 drehfest angeordnet ist. Wenn die Welle 25 sich ausgehend von der in Figur 3 dargestellten Lage weiter im Gegenurzeigersinn dreht, drückt der Nocken 24 einen mit dem Unterkiefer 13 fest verbundenen Stab 28 entgegen der Kraft einer nicht dargestellten Feder nach vorne, so dass der Unterkiefer 13 die genannte Drehbewegung ausführt, deren Endposition in Figur 4 dargestellt ist.

In der nun folgenden Phase wird das Reinigen der Kauflächen und der Innenflächen der Zähne demonstriert. Prinzipiell wäre es möglich, zur Unterscheidung der Kaufläche und Innenfläche mehrere Lichtquellen zu verwenden, die jeweils nur die betreffende Fläche eines Zahnes oder einer Gruppe von Zähnen aufleuchten lassen. Eine andere Möglichkeit besteht darin, Lichtquellen einzusetzen, die in verschiedenen Farben leuchten können, beispielsweise grün für die Innenfläche und rot für die Kaufläche. Beide dieser möglichen Lösungen würden aber keine Möglichkeit bieten, vertikale Bewegungen der Zahnbürste zu animieren. Beim hier beschriebenen Ausführungsbeispiel der Erfindung sind deshalb weitere Leuchtdioden 19 und 20 ausserhalb des Mundes der Puppe, beispielsweise im Rumpf vorgesehen. Wenn zum Beispiel die Innenflächen von Zähnen mit vertikalen Bürstenbewegungen gereinigt werden sollen, leuchten die Leuchtdioden 18 der entsprechenden Zähne auf, während die Leuchtdioden 19 abwechselnd blinken, um die Vertikalbewegung der Zahnbürste zu demonstrieren. Gleichzeitig leuchtet die innerhalb der Zahnreihe Angeordnete Leuchtdiode 20 auf und zeigt damit an, dass die Innenflächen zu bearbeiten sind. Wenn beispielsweise die Kauflächen von Stockzähnen mit parallel zur entsprechenden Zahnreihe geführten Bürstenbewegungen gereinigt werden sollen, blinken die Leuchtdioden nebeneinander liegender Stockzähne abwechselnd.

Nachdem auf diese Weise die Reinigung aller Flächen sämtlicher Zähne animiert wurde, kehrt der Unterkiefer 13 in die in Figur 2 dargestellte Ausgangslage zurück und sämtliche Leuchtdioden erlöschen.

Nach einer besonderen Ausführungsart der Erfindung kann das Gerät mit einer Wiedergabevorrichtung für Ton ausgestattet sein. Damit kann beispielsweise die Demonstration mit Geräuschen oder Musik untermalt werden oder es können zusätzliche, gesprochene Informationen und Anleitungen übermittelt werden.

Nach einer weiteren besonderen Ausführungsart der Erfindung kann das Gerät gleichzeitig als Ladestation für eine elektrische Zahnbürste ausgerüstet sein. Beim Programm für die Demonstration können Varianten für eine Handzahnbürste und für eine elektrische Zahnbürste vorgesehen sein, um die unterschiedliche Form und Dauer der mit der Zahnbürste auszuführenden Bewegungen zu berücksichtigen.

## Patentansprüche

1. Instruktionsgerät für die Dentalhygiene, bestehend aus einer Figur (1) mit einem Gesicht, in dem ein Modell eines Gebisses (8) angeordnet ist, wobei mindestens ein Teil der Zähne dieses Gebisses tansparent sind und in ihrem Inneren Lichtquellen (18) aufweisen, wobei eine Steuerung vorhanden ist, durch welche die Lichtquellen (18) ansteuerbar sind, derart, dass durch Aufblinken entsprechender Lichtquellen die zu reinigende Stelle, die Richtung, die Kadenz und die Dauer der Bewegung demonstriert wird, mit der eine zu instruierende Person eine Zahnbürste führen soll, **dadurch gekennzeichnet, dass** das Gebiss (8) eine obere Zahnreihe (9) und eine untere Zahnreihe (10) aufweist, welche relativ zueinander bewegbar sind.

2. Instruktionsgerät nach Anspruch 1, **dadurch gekennzeichnet, dass** die untere Zahnreihe (10) in einem relativ zur Figur (1) beweglichen Unterkiefer (13) angeordnet ist und dass der Unterkiefer (13) um eine Achse (23) schwenkbar ist.

3. Instruktionsgerät nach Anspruch 2, **dadurch gekennzeichnet, dass** im Gesicht eine Oberlippe (11) und im Unterkiefer (13) eine Unterlippe (12) gebildet sind, die in Bezug aufeinander so bewegbar sind, dass sie sich in einer geschlossenen Stellung mindestens annähernd berühren und dabei die Zahnreihen (9, 10) verdecken.

4. Instruktionsgerät nach Anspruch 3, **dadurch gekennzeichnet, dass** die Oberlippe (11) und die obere Zahnreihe (9) relativ zueinander beweglich sind und dass die Unterlippe (12) und die untere Zahnreihe (10) relativ zueinander beweglich sind.

5. Instruktionsgerät nach Anspruch 4, **dadurch gekennzeichnet, dass** die obere Zahnreihe (9) in der Figur (1) in einer Richtung mindestens annähernd senkrecht zur Berührungsebene der Zahnreihen (9, 10) beweglich gelagert ist und durch die Kraft mindestens einer Feder (16) nach unten gedrängt wird, dass die untere Zahnreihe (10) im Unterkiefer (13) in der genannten Richtung beweglich gelagert ist und durch die Kraft mindestens einer Feder (16) nach oben gedrängt wird und dass der Unterkiefer (13) ausgehend von der geschlossenen Stellung der Lippen (11, 12) in der genannten Richtung parallel nach unten verschiebbar ist.

6. Instruktionsgerät nach einem der vorangehenden Patentansprüche, **dadurch gekennzeichnet, dass** weitere Lichtquellen (19, 20) ausserhalb der Zähne angeordnet sind.

7. Instruktionsgerät nach einem der vorangehenden Patentansprüche, **dadurch gekennzeichnet, dass** es mit einer Wiedergabevorrichtung für Ton ausgestattet ist.

8. Instruktionsgerät nach einem der vorangehenden Patentansprüche, **dadurch gekennzeichnet, dass** es als Halter für eine Zahnbürste (7) ausgebildet ist.

9. Instruktionsgerät nach einem der vorangehenden Patentansprüche, **dadurch gekennzeichnet, dass** es als Ladegerät für eine elektrische Zahnbürste ausgebildet ist.
